# EUROPÄISCHE PATENTSCHRIFT

(11) **EP 1 226 920 B1**
(45) Veröffentlichungstag und Bekanntmachung des Hinweises auf die Patenterteilung: **07.04.2004**
(21) Anmeldenummer: 02001866.9
(22) Anmeldetag: 28.01.2002
(51) Int. Cl.: B29C 45/52

(54) **Verfahren zur Herstellung einer Sperrhülse für eine Rückstromsperre einer Kunststoff-Spritzgiessmaschine**
Method for producing a ring valve for a backflow barrier of an injection moulding machine
Procédé pour la fabrication d'une soupape annulaire pour le barrage antireflex d'une machine de moulage par injection

(30) Priorität: 30.01.2001 DE 10103862
(43) Veröffentlichungstag der Anmeldung: 31.07.2002
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 276 758
- US-A- 4 951 920
- OBIEGLO G ET AL: "TECHNISCHE KERAMIK SCHUETZT VOR VERSCHLEISS" KUNSTSTOFFE, CARL HANSER VERLAG. MUNCHEN, DE, Bd. 82, Nr. 2, 1. Februar 1992 (1992-02-01), Seiten 102-105, XP000249627 ISSN: 0023-5563

## Beschreibung

Die Erfindung betrifft ein Verfahren zur Herstellung einer Sperrhülse für eine Rückstromsperre einer Spritzgießmaschine zur Verarbeitung von Kunststoffen und anderem plastifizierbaren Massen nach dem Oberbegriff des Anspruches 1.

Beim Spritzgießen von Kunststoffen und anderen plastifizierbaren Materialien werden insbesondere bei Kunststoff-Spritzgießmaschinen Förderschnecken eingesetzt, die in Plastifizierzylindern axial verschiebbar und zum Plastifizieren und zum Fördern des plastifizierten Materials drehbar sind. Zum Einspritzen des in Folge der Reibung und zusätzlicher Heizelemente plastifizierten Materials in einen Formhohlraum wird vor die Förderschnecke ein Dosiervolumen dosiert, das anschließend mit der Förderschnecke als Kolben in den Formhohlraum eingespritzt wird. Hierzu wird die Förderschnecke im Plastifizierzylinder axial bewegt. Um zu vermeiden, dass bei diesem Einspritzvorgang plastifiziertes Material zurückfließt, werden stimseitig an der Förderschnecke Rückstromsperren eingesetzt. Diese Rückstromsperren besitzen eine Sperrhülse, die an einem Grundkörper der Rückstromsperre axial beweglich gehalten ist. So lange Material vor die Förderschnecke dosiert wird, gibt die Sperrhülse den Durchgang für das plastifizierte Material frei. Beim Einspritzen hingegen wird die Sperrhülse gegen einen Sitzring der Förderschnecke gepresst und dichtet dabei den Raum vor der Förderschnecke gegenüber dem Raum hinter der Rückstromsperre ab.

Beim Dosieren, das heisst bei rücklaufender rotierender Förderschnecke wird die Sperrhülse vom Sitzring abgehoben und gegen die Anlageflächen von am Kopf des Grundkörpers angeordneten Flügeln gedrückt. Die Sperrhülse dreht sich mit - infolge der Reibung an der Wand des Plastifizierzylinders - gegenüber der Förderschnecke reduzierter Geschwindigkeit während der Drehung der Förderschnecke mit, wobei es zu einem Trockenlauf zwischen den Anlageflächen der Flügel und der Sperrhülse und somit zu erhöhtem Verschleiß kommen kann.

Aus der EP 276 758 A1 ist eine derartige Rückstromsperre bekannt, bei der bereits ein Ring aus verschleißfestem Material in eine verhältnismäßig dickwandige Aufnahmebohrung eingesetzt ist, deren Wandstärke nahezu der Ringstärke entspricht. Diese Wandstärke ist durch das Herstellungsverfahren bedingt. Ist dieser Umgriff nämlich zu schmal, kommt es beim vom Fachmann üblicherweise bevorzugten Einschrumpfen des Rings aus verschleißarmem Material oder beim Einlöten zu einem Zerbersten des Umgriffs. Aus diesem Grund wird dort der Ring allenfalls weichgelötet. Eine Temperatur jedoch, die dem Weichlöten entspricht ist nicht ausreichend, um eine Härtung der Sperrhülse zu bewirken. Ein Hartlöten kann dort jedoch nicht erfolgen, da ansonsten der Grundwerkstoff zerstört würde. Daher wird zuerst die Sperrhülse gehärtet und dann der Ring eingelötet, was in diesem Fall nur durch Weichlöten erfolgen kann. Da aber eine entsprechend hohe Umgebungstemperatur beim Betrieb der Sperrhülse vorhanden ist, ist ein Weichlöten für diesen Zweck nicht ausreichend, so dass der Fachmann in der Vergangenheit auf das Einschrumpfen derartiger Teile zurückgegriffen hat (vgl. obiegle et al: Technische Keramik schützt vor Verschleiß, Kunstoffe 82 (1992) No. 2, Seiten 102-105).

Um dem Verschleiß entgegen zu wirken, wurde in der DE 198 49 472 A1 vorgeschlagen, an den der Sperrhülse zugewandten Flächen der Flügel Auflageelemente anzuordnen, wobei zumindest die Auflageflächen dieser Auflageelemente aus einem verschleißarmen Werkstoff aufgebaut sind. Ergänzend kann die Anlagefläche der Sperrhülse ebenfalls aus verschleißarmem Werkstoff bestehen. Durch diese Maßnahmen soll der hohe Verschleiß der Rückstromsperre abgebaut werden und/oder örtliche Schädigungen der Spritzgießmasse an der Berührungsfläche zwischen Sperrhülse, Flügel und Plastifizierzylinder sollen vermieden werden. Allerdings muss beim Zusammenfügen von Sperrhülse und verschleißarmen Material ein entsprechender Positionierungsaufwand betrieben werden, insbesondere ist es erforderlich, während des Verbindungsprozesses die verschleißarmen Elemente sorgfältig zu zentrieren, um eine aufwändige Nachbearbeitung zu vermeiden.

Ausgehend von diesem Stand der Technik liegt der vorliegenden Erfindung die Aufgabe zu Grunde, ein günstiges Verfahren zur Herstellung einer den Verschleiß reduzierenden Sperrhülse für eine Rückstromsperre zu schaffen.

Diese Aufgabe wird durch ein Verfahren mit den Merkmalen des Anspruches 1 gelöst.

Wie im Stand der Technik wird verschleißarmes Material im Übergangsbereich zwischen Sperrhülse und Führungselement in Form eines in einer als Zentrierhilfe ausgebildeten Aufnahmebohrung aufgenommenen Rings aus verschleißarmem Material. Der Kniff beruht darauf, dass tatsächlich in einem Arbeitsgang sowohl der Ring aus verschleißarmem Material in die Bohrung eingelötet wird und gleichzeitig die Sperrhülse gehärtet wird. Diese Gleichzeitigkeit ist absolut keine Selbstverständlichkeit beim Herstellungsprozess, sie bereitet vielmehr Schwierigkeiten sowohl bei der Dimensionierung der Teile der Sperrhülse als auch bei der Abstimmung der verwendeten Materialien. Erfindungsgemäß sind Löttemperatur und Vergütungstemperatur so aufeinander abgestimmt, dass gleichzeitig der Ring eingelötet werden kann und ebenso im gleichen Moment die Sperrhülse gehärtet wird. Damit sind Grundmaterial, Löttemperatur und Härtetemperatur aufeinander abgestimmt.

Beim Einlöten (Hartlöten) des Rings in die Sperrhülse wird in einem Arbeitsgang die Verbindung zwischen Ring und Sperrhülse hergestellt und gleichzeitig die Sperrhülse gehärtet. Damit ergibt sich in einem schnelleren und ghünstigeren Herstellungsverfahren eine innigere Verbindung zwischen Sperrhülse und Ring und damit ein qualitativ besseres Produkt.

Zur Erhöhung des Verschleißschutz wird bei einer Ausgestaltung nach den Anspruch 2 ein im Verhältnis zum Durchmesser des Rings schmaler Umgriff an der Sperrhülse als Berandung der Aufnahmebohrung stehengelassen, so dass im Gebrauchszustand, wenn das verschleißarme Material des Rings auf die verschleißarmen Elemente am Führungselement trifft, tatsächlich nur verschleißarme Werkstoffe miteinander in Berührung kommen. Gleichzeitig wird zusätzlich die Geometrie des Umgriffs auf die Randbedingungen abgestimmt, damit das Ziel dieser gleichzeitigen Einlötung und Härtung leichter erreicht werden kann.

Weitere Vorteile ergeben sich aus der folgenden Beschreibung.

Im Folgenden wird die Erfindung an Hand der beigefügten Figuren näher erläutert. Es zeigen:
- Fig. 1: einen Schnitt durch einen Plastifizierzylinder im Bereich des Führungselements einer Rückstromsperre,

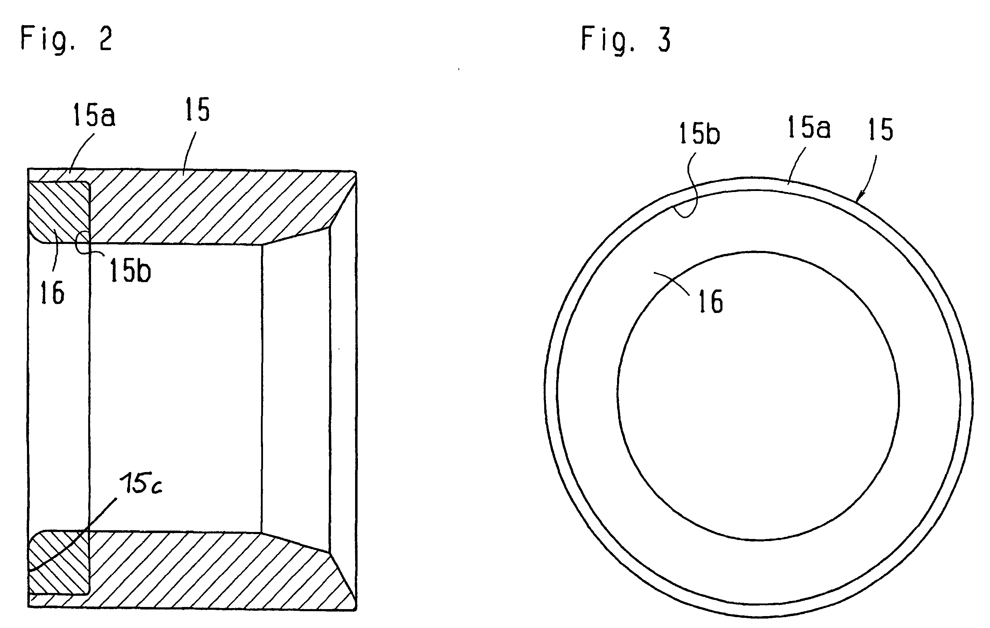

- Fig. 2: einen Längsschnitt durch die Sperrhülse,
- Fig. 3: eine Ansicht der Sperrhülse gemäß Fig. 2 von links.

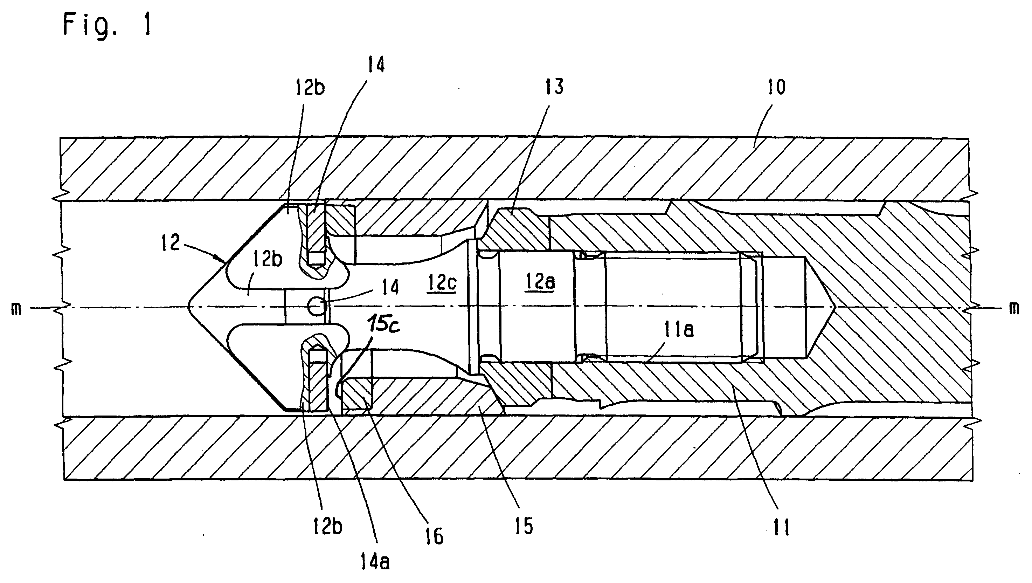

Fig. 1 zeigt den Teil eines Plastifizierzylinders 10 einer Spritzgießmaschine zur Verarbeitung von Kunststoffen und anderer plastifizierbarer Materialien wie zum Beispiel keramische oder pulvrige Massen. Im Plastifizierzylinder wird zugeführtes Material durch Reibung und zusätzliche, zeichnerisch nicht dargestellte Heizelemente plastifiziert. Durch die Förderschnecke 11 im Plastifizierzylinder 10 wird das plastifizierte Material vor die Förderschnecke, in Fig.1 links vom Führungselement 12 gefördert. Am Kopf der Förderschnecke 11 ist ein Führungselement 12 als Teil einer Rückstromsperre angebracht, die auch eine zylindrische Sperrhülse 15 umfasst. Das Führungselement 12 weist einen Grundkörper 12c auf, der mittig einen verjüngten Bereich besitzt, an dem die Sperrhülse 15 axial begrenzt beweglich angeordnet ist. Die Sperrhülse 15 steht mit ihrem Außendurchmesser über ihre Länge mit der Innenwandung des Plastifizierzylinders 10 in Wirkverbindung.

Das Führungselement 12 ist in einer Bohrung 11a der Förderschnecke 11 mit einem Anschluß 12a befestigt. Im Übergangsbereich zwischen Führungselement 12 und Förderschnecke 11 ist ein Sitzring 13 angeordnet, der im geschlossenen Zustand der Rückstromsperre der Sperrhülse 15 als Anschlag dient, wie dies in Fig. 1 in der unteren Hälfte dargestellt ist. In der oberen Hälfte hingegen ist die Rückstromsperre offen, wobei die Sperrhülse 15 an den Flügeln 12b des Führungselements 12 zur Anlage kommt, so dass Material zwischen den Flügeln in den Raum vor die Förderschnecke dosiert werden kann. Das Führungselement weist wenigstens zwei Flügel 12b, im Ausführungsbeispiel 4 Flügel auf, von denen in Fig.1 drei zu erkennen sind.

Im Übergangsbereich zwischen Sperrhülse 15 und den Flügeln 12b des Grundkörpers 12c sind verschleißarme Elemente 14 angeordnet, die dort eine Anlagefläche 14a für die Sperrhülse 15 bilden. Diese verschleißarmen Elemente 14 werden in Bohrungen der Flügel 12b so eingebracht, dass die verschleißarmen Elemente 14 im Gebrauchszustand des Führungselements 12 mit dieser Anlagefläche 14a der Sperrhülse 15 zugewandt sind. Dies erfolgt dadurch, dass die verschleißarmen Elemente in die Bohrungen eingefügt und dort befestigt werden.

Mit diesen verschleißarmen Elementen 14 steht eine verschleißarme Fläche der Sperrhülse 15 in Wirkverbindung. Dieser Bereich aus verschleißarmem Material wird durch einen Ring 16 gebildet, der in eine Aufnahmebohrung 15b der Sperrhülse eingesetzt wird, die der Anlagefläche 14a zugewandt ist. Die Anlagefläche 14a wird hier durch die verschleißarmen Elemente 14 gebildet, könnte aber auch durch das Führungselement 12 selbst gebildet sein. In der Aufnahmebohrung 15b wird der Ring 16 paßgenau zentriert. Die Aufnahmebohrung 15b, die durch Bohren bzw. Drehen leicht und positionsgenau herstellbar ist, erleichtert zudem den Zusammenbau, da auf eine aufwändige Zentriervorrichtung verzichtet werden kann. Damit läßt sich die Sperrhülse schneller und damit günstiger herstellen und vor allem lassen sich aufwändige Nacharbeiten vermeiden.

Die Sperrhülse 15 ist dadurch über ihren gesamten Außendurchmesser und über ihre gesamte Länge mit demselben Material, nämlich dem meist gegenüber dem verschleißarmen Material günstigeren Material ihres Grundkörpers mit dem Plastifizierzylinder 10 in Wirkverbindung, so dass es nicht aufgrund verschiedener Materialkombinationen zu einem unterschiedlichen Verschleiß zwischen Sperrhülse 15 und Plastifizierzylinder 10 kommen kann. Um den Verschleiß weiter zu verringern, bilden Ring 16 und Sperrhülse 15 in Richtung auf die Flügel 12b des Führungselement 12 eine geschlossene, sich bis zur Innenwandung des Plastifizierzylinders 10 erstreckende Kante 15c bzw. Fläche aus, so dass der Ring radial nach außen vollflächig von der Sperrhülse 15 überdeckt ist. Damit wird vermieden, dass es im Übergangsbereich zwischen Ring 16 bzw. Sperrhülse 15 und dem Plastifizierzylinder 10 zu einer Ablagerung von plastifiziertem Material kommt, dass dort verkokt und die Reibung unter Erhöhung des Verschleiß auch des Plastifizierzylinders erhöht.

Die Aufnahmebohrung 15b weist einen im Verhältnis zum Durchmesser des Rings 16 schmalen Umgriff 15a für den Ring auf, so dass aufwändige Zentriereinrichtungen entfallen, da der Umgriff eine gute Positioniergenauigkeit beim Fügen zwischen Ring 16 und Sperrhülse 15 mit sich bringt. Vor allem aber ist gewährleistet, dass nur der verschleißarme Bereich des Rings 16 und nicht das Material der Sperrhülse 15 mit dem Führungselement 12 in Berührung kommt. Der Ring 16 liegt damit an der Sperrhülse 15 nur außenseitig und mit einer Planseite an. Grundsätzlich wäre es aber auch möglich mittig einen Umgriff als Positionierhilfe anstelle des außenseitigen Umgriffs 15a oder zusätzlich zu diesem stehen zu lassen.

Der Kniff beruht auf dem Herstellungsverfahren, bei dem in einem Arbeitsgang sowohl der Ring 16 aus verschleißarmem Material in die Aufnahmebohrung 15b eingelötet (hartgelötet) wird und gleichzeitig die Sperrhülse 15 mit ihren beiden Materialien gehärtet wird. Erfindungsgemäß sind dazu Löttemperatur und Vergütungstemperatur aber auch das Grundmaterial aufeinander abgestimmt. Damit ergibt sich in einem schnelleren und günstigeren Herstellungsverfahren eine innigere Verbindung zwischen Sperrhülse und Ring und damit ein qualitativ besseres Produkt. Die Stärke des Umgriffs beträgt im Ausführungsbeispiel wenige Millimeter und entspricht etwa 10 bis 20 % der Ringstärke (Ringaußendurchmesser minus Ringinnendurchmesser.

Die Anlagefläche 14a wird durch nachträgliches Abarbeiten von Teilen der Wandung der Bohrung unter zumindest teilweisem Freisetzen der verschleißarmen Elemente 14 hergestellt, wobei bedarfsweise auch Teile der verschleißarmen Elemente 14 wieder nachbearbeitet bzw. abgearbeitet werden. Es werden also die verschleißarmen Elemente 14 in die Bohrungen eingesetzt, die vorzugsweise bereits in den Flügeln 12b des Rohkörpers vorhanden sind, die eigentliche Kontur der Flügel 12b wird jedoch erst nachträglich hergestellt. Vorzugsweise sind die Bohrungen im Wesentlichen radial zur Mittelachse m-m des als Führungsbolzen ausgebildeten Führungselements 12 eingebracht, so dass beim Freisetzen der verschleißarmen Elemente die Anlagefläche 14a durch die Seitenflächen der verschleißarmen Elemente gebildet wird.

Das Führungselement 12 bildet damit seine Anlagefläche 14a quer zur Längserstreckung der verschleißarmen Elemente 14 und damit an der Längsseite der verschleißarmen Elemente aus. Dadurch ist es möglich, dass sich die verschieißarmen Elemente 14 im Wesentlichen entlang der stimseitigen, der Sperrhülse 15 zugewandten Kante der Flügel 12b erstrecken, so dass über einen verhältnismäßig langen Bereich eine verschleißfeste Zone gebildet wird. Das verschleißarme Element 14 ist vorzugsweise ein beim Einbringen in die Bohrung zylindrischer Stift, der über einen etwas geringeren Durchmesser als die Bohrung verfügt.

### Bezugszeichenliste

- 10: Plastifizierzylinder
- 11: Schnecke
- 11 a: Ausnehmung
- 12: Führungselement
- 12a: Anschluss
- 12b: Flügel
- 12c: Grundkörper
- 13: Sitzring
- 14: Verschleißarmes Element
- 14a: Anlagefläche
- 15: Sperrhülse
- 15a: Umgriff
- 15b: Aufnahmebohrung
- 15c: Kante
- 16: Ring
- m-m: Mittelachse

## Patentansprüche

1. Verfahren zur Herstellung einer Sperrhülse (15) für eine in einem Plastifizierzylinder aufgenommenen Rückstromsperre für eine Spritzgießmaschine zur Verarbeitung von Kunststoffen und anderen plastifizierbaren Massen, wobei an dem einem Führungselement (12) der Rückstromsperre zugewandten Ende der axial begrenzt verschiebbaren, im Wesentlichen zylindrischen Sperrhülse (15) eine Aufnahmebohrung (15b) eingebracht wird, in der ein Ring (16) aus verschleißarmen Material als verschleißarmer Bereich so eingepasst wird, dass die Sperrhülse (15) über ihren gesamten Außendurchmesser und über die gesamte Länge der Sperrhülse mit demselben Material mit dem Plastifizierzylinder (10) in Wirkverbindung steht,
**dadurch gekennzeichnet, dass** der Ring (16) in die Aufnahmebohrung (15b) eingelötet wird und dabei gleichzeitig die Sperrhülse (15) gehärtet wird.

2. Verfahren nach Anspruch 1, **dadurch gekennzeichnet, dass** beim Einbringen der Aufnahmebohrung (15b) ein im Verhältnis zum Durchmesser der Aufnahmebohrung (15b) schmaler Umgriff (15a) stehen gelassen wird.

## Claims

1. Method for producing a barrier sleeve (15) for a back-flow barrier, which is accommodated in a plasticising cylinder, for an injection moulding machine for the processing of plastics materials and other plasticisable substances, a receiving bore (15b) being inserted at the end of the substantially cylindrical barrier sleeve (15), which is displaceable in an axially defined manner, said end facing a guide element (12) of the back-flow barrier, a ring (16) made of material with a low rate of wear and tear being fitted in such a manner in said bore as a region with a low rate of wear and tear that the barrier sleeve (15) is operationally connected to the plasticising cylinder (10) over its entire outer diameter and over the entire length of the barrier sleeve with the same material, **characterised in that** the ring (16) is soldered into the receiving bore (15b) and at the same time the barrier sleeve is hardened.

2. Method according to claim 1, **characterised in that** when the receiving bore (15b) is inserted, a collar (15a) is left, said collar being narrow compared with the diameter of the receiving bore (15b).

## Revendications

1. Procédé de fabrication d'un manchon de fermeture (15) pour une barrière anti-reflux logée dans un cylindre de plastification d'une machine à injection pour la transformation de matières plastiques et d'autres masses plastifiables, un perçage de réception (15b) étant pratiqué à l'extrémité, tournée vers un élément de guidage (12) de la barrière anti-reflux, du manchon de fermeture (15) sensiblement cylindrique et pouvant coulisser de manière limitée axialement, dans ledit perçage une bague (16) en matière peu sujette à usure, constituant une zone peu sujette à usure, étant ajustée de manière que le manchon de fermeture (15) soit en liaison active avec le cylindre de plastification (10), sur tout son diamètre extérieur et sur toute la longueur du manchon de fermeture avec le même matériau,
**caractérisé en ce que** la bague (16) est brasée dans le perçage de réception (15b) et ainsi le manchon de fermeture (15) est trempé en même temps.

2. Procédé selon la revendication 1, **caractérisé en ce que** lorsque l'on pratique le perçage de réception (15b) on laisse subsister un étroit rebord (15a) par rapport au diamètre du perçage de réception (15b).
